# EUROPEAN PATENT SPECIFICATION

(11) **EP 4 201 910 B1**
(45) Date of publication and mention of the grant of the patent: **26.11.2025**
(21) Application number: 22214130.1
(22) Date of filing: 16.12.2022
(51) Int. Cl.: C04B 20/12, C04B 111/00, A01N 59/20, E04D 7/00, E04D 13/00

(54) **METHOD FOR THE PRODUCTION OF COATED MINERAL GRIT FOR ROOFING OF BUILDINGS**
VERFAHREN ZUR HERSTELLUNG VON BESCHICHTETEN MINERALISCHEN STREUGUT FÜR DIE DACHDECKUNG VON GEBÄUDEN
PROCÉDÉ DE PRODUCTION DE SABLE MINÉRAL REVÊTU POUR COUVERTURE DE BÂTIMENTS

(30) Priority: 23.12.2021 IT 202100032528
(43) Date of publication of application: 28.06.2023
(73) Proprietor: Tegola Canadese Srl, 31029 Vittorio Veneto (TV) (IT)
(72) Inventor: FLOREAN, Luca, 33170 Pordenone (PN) (IT); MAZZER, Emilio, 31012 Cappella Maggiore (TV) (IT)
(74) Representative: Frare, Paolo

(56) References cited:
- US-A1- 2011 257 295

## Description

The present invention refers to a method for the production of coated mineral grit suitable for the manufacture of covering artefacts having a bituminous type support, or a support comprising a vinyl or acrylic type adhesive, for roofing of buildings (for example roofs), such as for example Canadian tiles, bituminous sheaths, etc.

Nowadays it is known to coat the roofs of the buildings with covering artefacts, such as Canadian tiles or bituminous sheaths, comprising a bituminous type support, or a support comprising a vinyl or acrylic type adhesive, covered with a mineral grit.

The main purpose of these covering artefacts is to protect the covering (the roof) of the buildings from the action of weather.

The rough mineral grit is generally coloured using inorganic pigments in order to obtain covering artefacts of the desired colour.

It should be noted that in this text, the term *"rough mineral grit"* means a grit composed of a group of small fragments of a certain mineral (or a group of minerals), as it occurs in its natural state, i.e. not previously subjected to covering treatments with other substances and/or to surface treatments altering the chemical and/or physical properties thereof.

In order to give the rough mineral grit anti-fouling properties, and thus prevent the formation of algae, mould, lichens, etc. on the covering artefacts covered with it, it is known to add to it additives such as metal oxides (for example copper oxides and/or zinc oxide and/or silver oxide) or metallic particles (for example copper and/or zinc), in the form of fine powders; such additives are generally added to the grit during the colouring process.

From these processes a grit is obtained, which will be hereinafter referred to as "coated mineral grit".It is also known to treat the mineral grit coated with a hydrocarbon oil, or with a mixture of hydrocarbon oils, containing hydrophobising molecules (i.e. capable of rendering the surface of the mineral grit coated by them hydrophobic) and molecules promoting adhesion to the support; examples of molecules used as hydrophobising and adhesion-promoting agents are organo-siloxanes, silanes and silicones with alkyl chains with length ranging between 1 and 25 carbon atoms (C1-C25).

These molecules, carried by the hydrocarbon oil (or mixture of oils), anchor themselves to the surface of the grit, forming chemical bonds with the atoms of this surface.

The alkyl groups of these molecules, chemically bound to the surface of the grit, have a low chemical affinity with the molecules of water; the interposition of these alkyl groups between the water molecules possibly present and the surface of the coated mineral grit makes this surface hydrophobic.

The alkyl groups, on the other hand, have a high chemical affinity with the organic molecules, such as those of bitumen used as a support in covering artefacts; this affinity results in the ability of these molecules to improve the adhesion between the mineral grit and the bituminous support.

This method of a known type for obtaining a coated mineral grit, however, has some drawbacks.

In fact, the high chemical affinity between the hydrocarbon oil (or mixture of hydrocarbon oils) used to carry the hydrophobising and adhesion-promoting molecules, and the alkyl groups of these molecules, hinders the formation of stable chemical bonds between these molecules and the surface of the coated mineral grit.

The hydrophobising and adhesion-promoting molecules therefore tend to remain dispersed in the hydrocarbon oil (or mixture of hydrocarbon oils) so that, when the covering artefacts with such a grit of known type are laid, these molecules are quickly washed away by the weather together with the oil or mixture of oils.

As a result, such coated mineral grit of known type, over time, tends to lose its hydrophobicity.

US2011257295A1 discloses a method for coating mineral granules to improve bonding to hydrocarbon-based substrate and coloring of same; in particular it discloses compositions comprising stamp sand granules embedded in asphalt, where the stamp sand granules comprise a silane coating. It discloses also methods of making a silane-coated stamp sand, the methods comprising combining stamp sand granules and a silane solution to form a mixture and drying the mixture. It further discloses methods of covering a surface, the methods comprising combining silane-coated particles and asphalt to provide a mixture and distributing the mixture on the surface.

The main task of the present invention is to solve the problems listed above, and therefore to manufacture a coated mineral grit for covering artefacts for roofing of buildings that is hydrophobic, anti-fouling, which has a high adhesiveness on bituminous supports and on supports comprising a vinyl or acrylic type adhesive, in particular for applications in outdoor environment, and which maintains these characteristics unchanged for a relatively long time even if subjected to atmospheric events or to substantial mechanical stresses.

As part of this task, one aim of the invention is to obtain a coated mineral grit for covering artefacts for roofing of buildings with relatively low production costs.

The Applicant has realized that it is possible to apply to a rough mineral grit a covering containing organo-siloxanes and/or silanes using water instead of hydrocarbon oil (or oils) as a carrier, thus eliminating the aforementioned problem of washing away found in the prior art, and obtaining a coated mineral grit with high and persistent hydrophobic and anti-fouling properties, which has a high adhesiveness on bituminous supports or on supports comprising a vinyl or acrylic type adhesive, and which maintains these characteristics unchanged for a relatively long time even if subjected to atmospheric events or to substantial mechanical stresses.

In particular, the task and the aims according to the present invention are achieved by a method for the production of coated mineral grit for the manufacture of coating elements with a bituminous support, or with a support comprising a vinyl or acrylic type adhesive, for roofing of buildings, comprising the following steps:
- arranging some rough mineral grit;
- after arranging some rough mineral grit, inserting said rough mineral grit into mixing means together with a first treatment mixture comprising water, pigments, sodium silicate and/or potassium silicate, kaolin, and, preferably but not necessarily, one or more additives with anti-fouling properties, such as for example copper oxides and/or zinc oxide and/or silver oxide and/or metallic copper and/or metallic zinc;
- after inserting this rough mineral grit into mixing means, mixing the rough mineral grit and the first treatment mixture until a coated mineral grit is obtained;
- after mixing the rough mineral grit and the first treatment mixture, heating the coated mineral grit to a predetermined firing temperature;
- after heating the coated mineral grit, cooling the coated mineral grit up to a predetermined intermediate cooling temperature.

In the method according to the invention, the first treatment mixture comprises one or more organo-siloxanes and/or silanes which are thus applied to the rough mineral grit by means of an aqueous solution.

Advantageously, in the case in which the method according to the invention comprises applying one or more organo-siloxanes and/or silanes on the mineral grit on the coated mineral grit, this method comprises, after, or simultaneously to, cooling the coated mineral grit, a further step of putting the coated mineral grit into contact with a second treatment mixture comprising water and one or more organo-siloxanes and/or silanes.

Advantageously, the first treatment mixture comprises one or more additives with anti-fouling properties.

Advantageously, the one or more additives with anti-fouling properties comprise copper oxides and/or zinc oxide and/or silver oxide and/or metallic copper and/or metallic zinc.

Advantageously, the firing temperature is below 480 °C.

More preferably, the firing temperature is comprised between 300°C and 350°C.

Advantageously, the step of heating the coated mineral grit to a predetermined firing temperature lasts between 10 and 25 minutes.

These firing times are reduced compared to the firing times of the known solutions, which are around 30-40 minutes; this reduction in firing times is advantageous because it reduces the risk of organo-siloxanes and/or silanes being degraded by the firing itself.

Advantageously, the intermediate cooling temperature is comprised between 280 and 390 °C.

Advantageously, the method according to the invention comprises, after, or simultaneously to, cooling the coated mineral grit to an intermediate cooling temperature, a step of putting the coated mineral grit into contact with a third treatment mixture comprising a polyalkylbenzenes-based hydrocarbon solvent in which phosphoric and/or silanic esters of ethoxylated fatty acids are dispersed.

Advantageously, the method according to the invention comprises, after arranging some rough mineral grit, and before inserting the rough mineral grit into mixing means, a step of pre-heating in which the rough mineral grit is heated to a predetermined pre-heating temperature.

Advantageously, the predetermined pre-heating temperature is comprised between 60 and 70 °C.

Advantageously, during the step of pre-heating, the rough mineral grit is heated to the pre-heating temperature for a predetermined time, advantageously comprised between 5 and 10 minutes.

Advantageously, the method according to the invention comprises, simultaneously or after the step of pre-heating and before inserting the rough mineral grit into mixing means, a step of mechanically stirring the rough mineral grit.

Advantageously, in the method according to the invention, between the step of pre-heating and the step of inserting the rough mineral grit into the mixing means, the rough mineral grit is contained in a heating furnace, wherein the method preferably comprises, simultaneously or after the step of pre-heating, and before inserting the rough mineral grit into the mixing means, a step of removing the air present in the region of the pre-heating furnace containing the rough mineral grit.

Advantageously, the rough mineral grit has a grain size comprised between 100 and 10 mesh.

Advantageously, the grit can be composed of grains of different grain sizes; for example, the grit can be advantageously composed of less than 10% of granules having mesh 10 (average diameter about 2 mm), from 55 to 75% of granules having mesh 14 (average diameter 1.41 mm), from 15 to 30% of granules having mesh 20 (average diameter 0.84 mm), from 5 to 15% of granules having mesh 30 (average diameter 0.59 mm), of less than 10% of granules having mesh 35 (average diameter 0.5 mm).

Advantageously, the rough mineral grit comprises basalt and/or slate and/or cristobalite and/or olivine grit or, more generally, one or more rocks and/or minerals of the type generally used for the manufacture of building artefacts.

The features and the advantages of the present invention will be more apparent from the following description, which is to be understood as exemplifying and not limiting, with reference to the appended schematic drawings, wherein:
- figure 1 is a schematic representation of an advantageous embodiment of a plant for the realization of the method according to the invention;
- figure 2 is a schematic sectional view of an example of a possible grain of a coated mineral grit, during a step of the method according to the invention;
- figure 3 is a schematic sectional view of the grain of figure 2 after having been subjected to a further advantageous step of the method according to the invention;
- figure 3a is an enlarged detail of figure 3;
- figure 4 is a sectional view of the grain of figure 3 in a further advantageous step of the method according to the invention;
- figure 4a is an enlarged detail of figure 4.

The method for the production of coated mineral grit according to the invention comprises an initial step wherein some rough mineral grit is arranged, advantageously within first storage means 1, such as for example one or more silos.

Advantageously, the rough mineral grit may comprise basalt and/or slate and/or cristobalite and/or olivine grit or, more generally, one or more rocks and/or minerals of the type generally used for the manufacture of building artefacts.

Advantageously, the grain size distribution of the rough mineral grit is substantially uniform, and is preferably comprised between 100 and 10 mesh.

Alternatively, the rough mineral grit may comprise a plurality of grains having different meshes.

It should be noted that "mesh" is a unit of measurement, used in the grit industry, which indicates the number of meshes per linear inch (1 inch = 25.40 mm) of that sort of "sieve" that is formed when particles are placed next to each other on a plane; common sieves are classified based on the *"number of meshes contained in a linear inch (mesh)",* and in the same way the dimensions of the particles that make up the powders or grits can be classified. In practice the spaces between the particles placed along a linear inch are counted.

After the step wherein the rough mineral grit is arranged, the method according to the invention comprises a step wherein the rough mineral grit is inserted into mixing means 2 (for example a concrete mixer, or other rotary mixer of known type) together with a mixture, which will be hereinafter referred to as "first treatment mixture", comprising water, pigments, sodium silicate and/or potassium silicate, kaolin, and, preferably, but not necessarily, additives with anti-fouling properties.

The additives with anti-fouling properties may advantageously comprise copper oxides (Cu₂O and CuO), and/or zinc oxide (ZnO) and/or silver oxide (Ag₂O) and/or metallic copper (Cu(M)) and/or metallic zinc (Zn(M)), advantageously in the form of powders.

An advantageous embodiment of the method according to the invention comprises, after the step wherein some rough mineral grit is arranged, and before the step wherein the rough mineral grit is inserted into the mixing means 2, a step of pre-heating in which the rough mineral grit is heated to a desired pre-heating temperature Tpr for a predetermined time tpr, preferably comprised between 5 and 10 minutes.

Preferably, the pre-heating temperature Tpr is comprised between 60 and 70 °C.

The pre-heating is preferably performed inside a pre-heating furnace 3, more preferably rotary, advantageously comprising a rotating drum, not illustrated, inside which the rough mineral grit is mixed to ensure its uniform heating.

Advantageously, the pre-heating furnace 3 comprises first temperature detection means, not illustrated, for example thermocouples, positioned therein so as to be able to detect the temperature of the rough mineral grit; for example, in the advantageous case of the thermocouples, they can be positioned in such a way as to be in contact with the rough mineral grit when it is inside the pre-heating furnace 3.

The heating and simultaneous mixing of the rough mineral grit, advantageously inside the pre-heating furnace 3, generally cause the formation of powder, which remains suspended in the air surrounding the rough mineral grit inside the pre-heating furnace 3.

In an advantageous embodiment, simultaneously to, or after, the step wherein the rough mineral grit is heated to a predetermined pre-heating temperature Tpr, the method according to the invention preferably provides for removing the air present in the region of the pre-heating furnace 3 containing the rough mineral grit (for example from the rotating drum, if provided); the removal of this air allows the simultaneous removal of the suspended powder in the same, preventing this powder from settling on the grit, with the risk of compromising the optimal subsequent coating of the same.

Below are reported the preferred concentrations of the various elements included in the first treatment mixture, expressed as a percentage fraction by mass with respect to a total mass, which may be the mass of the rough mineral grit, indicated by m_{g}, or the mass of the polyalkylbenzenes-based hydrocarbon solvent, indicated by mₛ.

Preferably, the percentage concentration by mass of pigments in the first treatment mixture is comprised between 0.3 and 1.8%m/m_{g} (i.e. the mass of pigments in the first treatment mixture is comprised between 0.3% and 1.8% of the total mass of the rough mineral grit to which the first treatment mixture is to be applied).

Advantageously, the percentage concentration by mass of water in the first treatment mixture is comprised between 0.6 and 1.1 %m/m_{g}.

Advantageously, the percentage concentration by mass of kaolin in the first treatment mixture is comprised between 0.7 and 1.2 %m/m_{g}.

Advantageously, the percentage concentration by mass of sodium silicate and/or potassium silicate in the first treatment mixture is comprised between 3.2 and 4.0 %m/m_{g}.

In an advantageous embodiment of the method according to the invention, the additives with anti-fouling properties comprise copper oxides (CuO, Cu₂O) and/or zinc oxide (ZnO) and/or silver oxide (Ag₂O).

Preferably, the percentage concentration by mass of copper oxides (CuO, Cu₂O) in the first treatment mixture is comprised between 0.4 and 0.6 %m/m_{g}.

Preferably, the percentage concentration by mass of zinc oxide (ZnO) in the first treatment mixture is comprised between 0.4 and 0.6 %m/m_{g}.

Preferably, the percentage concentration by mass of silver oxide (Ag₂O) in the first treatment mixture is comprised between 0.4 and 0.6 %m/m_{g}.

In a further advantageous embodiment of the method according to the invention, the additives with anti-fouling properties comprise metallic copper (Cu(M)) and/or metallic zinc (Zn(M)), added to the first treatment mixture in the form of finely dispersed particles having a particle size preferably less than 50 mesh.

Preferably, the percentage concentration by mass of metallic copper (Cu(M)) in the first treatment mixture is comprised between 0.4 and 0.6 %m/m_{g}.

Preferably, the percentage concentration by mass of metallic zinc (Zn(M)) in the first treatment mixture is comprised between 0.4 and 0.6 %m/m_{g}.

After the step of inserting the rough mineral grit into the mixing means 2, the method according to the invention comprises, within the mixing means 2, a step wherein the rough mineral grit and the first treatment mixture are mixed until a grit is obtained, which in the present text is referred to as "coated mineral grit", which comprises (or consists of) the rough mineral grit whose grains have been covered with the first treatment mixture, preferably substantially uniformly, during the mixing step.

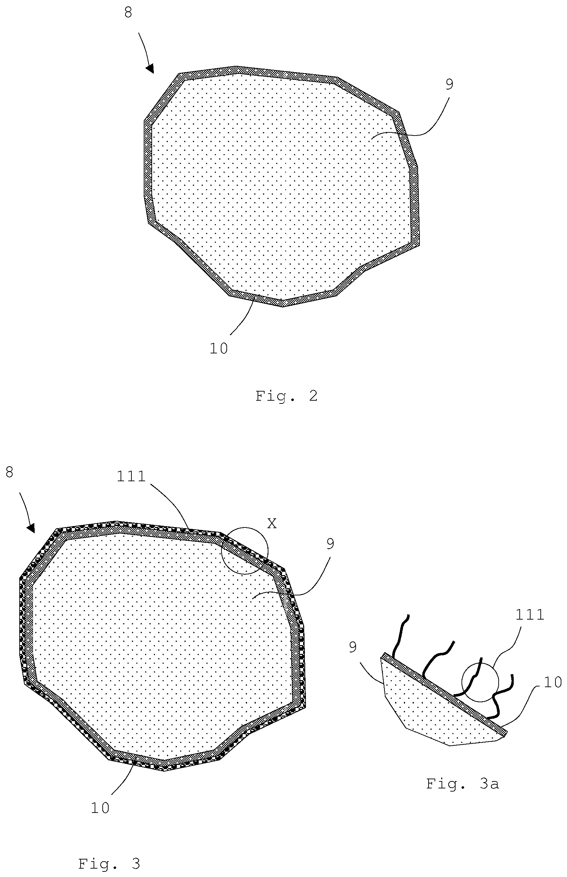

The coated mineral grit comprises grains 8, for example of the type schematised in figure 2, comprising a core 9, preferably of basalt, slate or cristobalite, and/or olivine or, more generally, one or more rocks and/or minerals of the types generally used for the manufacture of building artefacts, coated with a first layer 10 having the composition of the first treatment mixture.

The first treatment mixture further comprises one or more organo-siloxanes and/or silanes.

Advantageously, the percentage concentration by mass of organo-siloxanes that is added to the rough mineral grit, through the first treatment mixture, is comprised between 0.010 and 0.030 %m/mg.

Advantageously, the functional groups of the organo-siloxanes are alkyl chains having a number of carbon atoms comprised between 1 and 5 (C1-C5).

The addition of the organo-siloxanes, and/or silanes, in the first treatment mixture causes them to remain incorporated into the first layer 10, consequently increasing the hydrophobicity thereof, thus resulting in a coated mineral grit with hydrophobising molecules.

The high hydrophobicity conferred by the organo-siloxanes, and/or by the silanes reduces the permanence of any water on the surface of the coated mineral grit, thus preventing the proliferation of algae, mould, fungi, etc., on this surface and also hindering the settling of any solid residues (limestone, fine powders, etc.) present in the water on this surface.

The method according to the invention provides, after the step wherein the rough mineral grit and the first treatment mixture are mixed, a step of heating the coated mineral grit to a predetermined firing temperature Tc.

The heating is advantageously performed inside a firing furnace 4, preferably rotary, comprising a rotating drum, not illustrated, inside which the coated mineral grit is preferably mixed to ensure uniform heating.

Advantageously, the firing furnace 4 comprises second temperature detection means, not illustrated, for example thermocouples, positioned therein so as to be able to detect the temperature of the coated mineral grit; for example, in the advantageous case of the thermocouples, they can be positioned in such a way as to be in contact with the coated mineral grit when it is inside the firing furnace 4.

Advantageously, the firing temperature Tc is below 450°C, preferably comprised between 450°C and 480°C or between 300°C and 380°C; advantageously, such firing involves at least a partial (preferably total) vitrification of the first treatment mixture on the external surface of the rough mineral grit.

It has been found that heating the coated mineral grit to a temperature below 480°C does not deteriorate the silanes or the organo-siloxanes present in the coating of this mineral grit, whereas higher temperatures could degrade these components.

Advantageously, the step of heating the coated mineral grit to a predetermined firing temperature lasts between 10 and 25 minutes.

These firing times are reduced compared to the firing times of the known solutions, which are around 30-40 minutes; this reduction in firing times is advantageous, because it reduces (together with the lowering of the firing temperature) the risk of organo-siloxanes and/or silanes being degraded by the firing itself.

The method according to the invention provides that, after the step wherein the coated mineral grit is heated, the coated mineral grit is cooled to a predetermined intermediate cooling temperature Tri, advantageously inside a first cooler 5.

Advantageously, the intermediate cooling temperature Tri is comprised between 290°C and 380°C.

Advantageously, the first cooler 5 can be a rotary type cooler, for example in which a rotating drum, not illustrated, rotates stirring and mixing the coated mineral grit exiting the firing furnace 4. The continuous movement of the coated mineral grit inside the first cooler 5 causes it to cool through simple contact with the air present inside the first cooler 5.

Advantageously, the first cooler 5 comprises third temperature detection means, not illustrated, for example thermocouples, positioned therein so as to be able to detect the temperature of the coated mineral grit; for example, in the advantageous case of the thermocouples, they can be positioned in such a way as to be in contact with the coated mineral grit when it is inside the first cooler 5.

An advantageous embodiment of the method according to the invention comprises, after, or simultaneously to, cooling the coated mineral grit, a step wherein the coated mineral grit is put into contact with a second treatment mixture comprising water and organo-siloxanes and/or silanes; this step is preferably performed inside the first cooler 5, and contributes to the cooling of the coated mineral grit.

It should be noted that the step wherein the coated mineral grit is put into contact with a second treatment mixture comprising water and organo-siloxanes and/or silanes is optional.

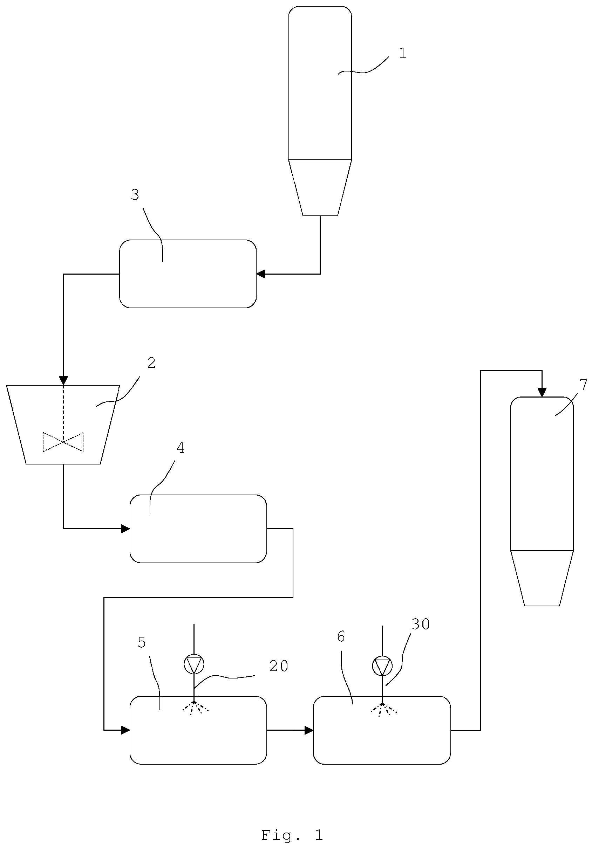

Advantageously, the second treatment mixture can be dispensed through a special first dispenser, schematically represented in figure 1, and indicated with the number 20.

Advantageously, the percentage concentration by mass of organo-siloxanes and/or silanes with which the coated mineral grit is put into contact, through the second treatment mixture, is comprised between 0.010 and 0.030 %m/m_{g}.

Advantageously, the functional groups of the organo-siloxanes are alkyl chains having a number of carbon atoms comprised between 1 and 5 (C1-C5).

Advantageously, like for example in the advantageous embodiment illustrated in figure 1, in the case in which in the first cooler 5 the second treatment mixture is applied to the coated mineral grit, at the exit of said first cooler 5 a coated mineral grit is obtained having, on its external surface, of hydrophobising molecules, whose grains 8 have a second layer 111, like for example the grain 8 represented schematically and in section in figures 3 and 3a, wherein the hydrophobising molecules are represented by solid lines projecting from the first layer 10.

Advantageously, in the case in which the first treatment mixture comprises one or more organo-siloxanes and/or silanes, the external surface of the grains of the coated mineral grit already comprises the hydrophobising molecules of organo-siloxanes and/or silanes even without subjecting said coated mineral grit to the step wherein the coated mineral grit is put into contact with a second treatment mixture, which thus becomes optional.

In an advantageous embodiment of the method according to the invention, after, or simultaneously to, cooling the coated mineral grit to an intermediate cooling temperature Tri, the coated mineral grit is put into contact with a third treatment mixture comprising a polyalkylbenzenes-based hydrocarbon solvent in which phosphoric and/or silane esters of ethoxylated fatty acids are dispersed.

The phosphoric and/or silane esters of ethoxylated fatty acids are organic molecules consisting of a polar part and an apolar part, the latter consisting of alkyl chains of varying length.

Through the polar part, these molecules bind to the surface of the coated mineral grit, and thus to the first layer 10, and through the apolar alkyl chains they interact with the bituminous or vinyl/acrylic support of the covering artefacts.

Such molecules improve adhesion of the coated mineral grit to the bituminous type supports or to the supports comprising a vinyl or acrylic type adhesive.

Advantageously, the percentage concentration by mass of phosphoric and/or silane esters of ethoxylated fatty acids in the second treatment mixture is comprised between 0,2 and 0,4 %m/mₛ (i.e. the mass of phosphoric and/or silane esters of ethoxylated fatty acids in the second treatment mixture is comprised between 0,2% and 0,4% of the total mass of the polyalkylbenzenes-based hydrocarbon solvent present in the mixture).

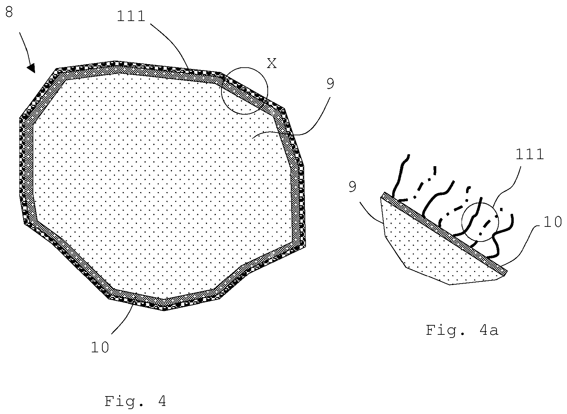

In an advantageous embodiment of the method according to the invention, such as that illustrated in figure 1, the coated mineral grit, treated with hydrophobising molecules (organo-siloxanes and/or silanes) by means of the second treatment mixture, exiting the first cooler 5 is put into contact with the third treatment mixture inside a second cooler 6; in this advantageous case, at the exit of the second cooler 6, a coated mineral grit is therefore obtained treated with hydrophobising molecules (organo-siloxanes and/or silanes) and adhesion-promoting molecules, whose grains 8 have a second layer 111 having both hydrophobising molecules, represented in figure 4a by solid lines, and adhesion-promoting molecules, represented in figure 4a by dash-dotted lines, in both cases projecting from the first layer 10.

Advantageously, in a further advantageous embodiment, the step wherein at the exit of the first cooler 5 the coated mineral grit is put into contact with the third treatment mixture inside the second cooler 6 can also be carried out without the coated mineral grit being previously subjected to treatment with the second treatment mixture; in this advantageous case, the hydrophobising molecules are incorporated into the first layer 10, and the adhesion-promoting molecules project externally from the latter.

Advantageously, the third treatment mixture can be dispensed by means of a special second dispenser, schematically represented in figure 1, and indicated with the number 30.

Advantageously, the second cooler 6 can be a rotary type cooler in which a rotating drum, not illustrated, rotates stirring and mixing the mineral grit coated at the exit of the first cooler 5.

The continuous movement of the coated mineral grit inside the second cooler 6 causes it to cool further through simple contact with the air present inside the second cooler 6.

Advantageously, the second cooler 6 comprises fourth temperature detection means, not illustrated, for example thermocouples, positioned therein so as to be able to detect the temperature of the coated mineral grit; for example, in the advantageous case of the thermocouples, they can be positioned in such a way as to be in contact with the coated mineral grit when it is placed inside the second cooler 6.

It should be noted that, for the purposes of the present invention, possible local deviations of the temperature of the grit in the various steps of the method with respect to the indicated temperature ranges are not substantially relevant.

In the advantageous embodiment of the method according to the invention illustrated in figure 1, the coated mineral grit is finally stored in second storage means 7, such as for example one or more silos.

Advantageously, the method according to the invention provides that the rough mineral grit is processed according to a continuous flow process, therefore with no need for intermediate storages of grit between the various steps.

The continuous flow processing of the mineral grit makes the process simpler, faster, as it is uninterrupted, and cheaper.

It has then been found that the method according to the invention solves the task and aim stated above, since, thanks to the use of water to carry the molecules of the one or more organo-siloxanes and/or silanes to the mineral grit, the formation of a greater number of chemical bonds between these molecules and the grit can be achieved, which make it more difficult to wash them away because of the weather, guaranteeing an effect of surface hydrophobicity lasting over time.

Furthermore, the method according to the invention makes it possible to obtain the coated grit with relatively low production costs and operating times.

Furthermore, the method according to the invention makes it possible to treat the rough mineral grit in such a way as to give it a certain colouring, a high surface hydrophobicity and a high adhesion to bituminous type supports, or to supports comprising an acrylic or vinyl adhesive, with a single continuous flow process, therefore without intermediate interruptions and with no need to store the grit between one step and the other of this process.

It should be pointed out that the high surface hydrophobicity gives the grit obtained by the method according to the invention a substantial anti-fouling/anti-algae/antifungal effect, in that, by preventing water from settling on the grit, and therefore on the covering artefact coated by it, an environment unfavourable to the proliferation of plants, algae, fungi is created on the external surface thereof.

Furthermore, by using different functional groups of the silane/siloxane molecules (in the apolar part that remains towards the outside of the grit), it is possible to expand the range of supports to which apply the grit; for example, if an epoxy functional group is present in the organo-silanes, this is reactive against acrylic/polyurethane resins/adhesives, and can therefore establish strong and lasting bonds with the support on which the treated grit is applied, if this is based on acrylic/polyurethane resins/adhesives.

Furthermore, the application of adhesion-promoting additives, i.e. phosphoric and/or silane esters of ethoxylated fatty acids to the grit allows to significantly improve the adhesion of the grit to bituminous supports, or to supports comprising an acrylic or vinyl adhesive, reducing the amount of additives used overall and consequently reducing the final cost of the covering artefacts.

Finally, the results of some comparative tests carried out by the Applicant on some examples of bituminous tiles covered with a grit obtained by the method according to the invention, and on the same type of bituminous tiles covered with a known grit always produced by the Applicant, are reported below.

In particular, Canadian tiles of the type known under the trade name "Premium Rectangular", marketed by the Canadian tile Applicant, were used.

The grit of known type used in the tests is a basaltic grit coloured with an inorganic coating obtained through the following procedure: the mineral material is inserted into a mixer together with a coating (with percentage composition by mass as per the following Table 1 relative to the mass m_{g} of the rough mineral grit); then, the grit is "vitrified" in a rotary furnace at a temperature comprised in the range 450-480°C and then cooled by means of two continuous rotary cylinders. Inside the first cylinder, the mineral material is cooled with water until reaching a temperature of 130-150°C through a spraying system. Subsequently, in the second cylinder, the material is treated with a solution based on polyalkylbenzenes (hydrocarbon oil) containing adhesion promoters (with a percentage by mass on the mass of the oil comprised between 0.2-0.4%m/mₒᵢₗ), organo-siloxanes (with a percentage by mass on the mass of the oil comprised between 2-3% m/mₒᵢₗ), catalysts and specific solvents (with a percentage by mass on the mass of the oil comprised between 1.5-2% m/mₒᵢₗ) and finally the finished product is sent to a storage silos.

**Tab. 1**

| Coating composition | |
|---|---|
| | %m/m_{g} |
| Pigment | 1 |
| Silicate Na/K | 3,7 |
| Kaolin | 1 |
| Water | 1 |

This grit of known type does not have a specific grain size, but a group of different grain sizes, according to the percentages reported in the following Tab. 2 (which reports the mesh values, the corresponding average diameter of the granule, and percentage of grains with a certain mesh/average diameter in the grit.

**Tab. 2**

| Mesh | mm | % |
|---|---|---|
| 10 | 2 | 0 |
| 14 | 1.41 | 4.7 |
| 20 | 0.84 | 55.6 |
| 30 | 0.59 | 21.7 |
| 35 | 0.5 | 10 |
| <35 | <0.5 | 8 |

The tests were also carried out on an example of grit obtained by the method according to the invention, and in particular with the grit described in the following example, referred to as New Grit 1.

New Grit 1: it is a grit obtained by the method according to the invention, in which the rough mineral grit is of the basaltic type, the first treatment mixture consists of the components illustrated in the following Tab. 3; the organo-siloxane is an organo-siloxane with C1 alkyl side chains (polydimethylsiloxane), applied to the rough mineral grit in aqueous solution within the first treatment mixture. The grain size of the grit is not single, but the grit is composed of the combination of different grain sizes indicated in Tab. 1.

**Tab. 3**

| New Grit 1 | |
|---|---|
| | %m/m_{g} |
| Pigment | 1 |
| Silicate Na/K | 3.7 |
| Kaolin | 1 |
| Water | 1 |
| CU2O | 0.5 |
| CuO | 0.5 |
| ZnO | 0.5 |
| Ag2O | 0.5 |
| Organo-siloxane | 0.015 |

It should be noted that the pigment used is the same for the two grits tested.

The tiles of the "Premium Rectangular" type, covered with the above two grits, have been subjected to the following tests.

### Biological growth test

Accelerated biological aging test in bioreactors with mix of cyanobacteria and algae on samples of Canadian tiles covered with 50x50mm grit in plan.

The tile samples covered with the grit of known type showed a visible and abundant growth/proliferation of algae and cyanobacteria on their surface.

The samples of tiles covered with New Grit 1, showed, at a visual inspection, a null/minimal growth of algae and cyanobacteria on the surface (in particular much lower than the samples of tiles covered with the grit of known type) .

### Adhesion test on bituminous support (Brush-test ASTM D4977)

Rectangular samples (with dimensions in plan 277 mm x 70 mm), obtained from Canadian tiles (with dimensions in plan 100 cm x 34 cm) covered with the two grit described above, were subjected to a brush test of the so-called "Brush-test ASTM D4977" type (in which the tiles are subjected to 50 brushing cycles using stainless steel bristles, and at the beginning and at the end of the test the samples are weighed and the percentages of lost grit and grit still adhering to the support are determined); as can be seen from the following Tab. 4, at the end of the test the tiles using the grit obtained by the method according to the invention maintained a percentage of grit much higher than the tiles using a grit of known type.

**Tab. 4**

| | % grit remained after 50 brushing cycles |
|---|---|
| Tile with known grit | 96.2 |
| Tile with New Grit 1 | 99.6 |

### Hydrophobicity test ("volcano test")

40 grams of the grit to be tested were placed in a circular dish/container to form a sort of "volcano" with external diameter 70-90mm, and internal diameter 20-40mm; then 80-100 ml of undistilled water were poured at a temperature between 23-28°C between the edge of the container and the granules, and the time T necessary for the water to overcome the surface tension of the granules and to penetrate inside the circular crown of the "volcano" was measured; as can be seen from the following Tab. 5, in the case of the grit obtained by the method according to the invention, it took an immensely longer time for water to penetrate into the circular crown than the grit of the known type.

**Tab. 5**

| | Time T |
|---|---|
| Tile with known grit | 85 minutes |
| Tile with New Grit 1 | > 20days |

### Measurement of contact angle (measurement of surface wettability)

This is the measurement of the angle comprised between the surface of a granule of the grit and the surface of a drop of water deposited on that granule.

The test detected, for the grit of known type, a contact angle comprised between 80 and 120° (excluding extremes), such that it was classified as "Hydrophobic", while for the grit New Grit 1, a contact angle greater than 120°, such that it was classified as "Super-hydrophobic" (i.e. not wettable by water).

It should be noted that the above tests were carried out repeatedly for several samples of the same type of grit, and the values of the results reported in the tables are the averages of the results obtained for the various samples.

The tests carried out by the Applicant showed that the grit produced by the method according to the invention has characteristics of hydrophobicity, anti-fouling/antialgae/antifungal properties, adhesion and permanence over time of the latter much higher than the grit of the known type.

## Claims

1. Method for the production of coated mineral grit for the manufacture of coating elements with a bituminous support, or with a support comprising a vinyl or acrylic adhesive, for roofing of buildings, comprising the following steps:
- arranging some rough mineral grit;
- after arranging some rough mineral grit, inserting said rough mineral grit into mixing means (2) together with a first treatment mixture comprising water, pigments, sodium silicate and/or potassium silicate, kaolin;
- after inserting said rough mineral grit into mixing means (2), mixing said rough mineral grit and said first treatment mixture until a coated mineral grit is obtained;
- after mixing said rough mineral grit and said first treatment mixture, heating said coated mineral grit to a predetermined firing temperature (Tc);
- after heating said coated mineral grit, cooling said coated mineral grit up to a predetermined intermediate cooling temperature (Tri);
wherein said method is **characterized in that** said first treatment mixture comprises one or more organo-siloxanes and/or silanes which are thus applied to said rough mineral grit by means of an aqueous solution.

2. Method, as in claim 1, comprising, after or simultaneously to cooling said coated mineral grit, a further step of putting said coated mineral grit into contact with a second treatment mixture comprising water and one or more organo-siloxanes and/or silanes.

3. Method, as in one or more of the previous claims, wherein said first treatment mixture comprises one or more additives with anti-fouling properties.

4. Method, according to claim 3, wherein said one or more additives with anti-fouling properties comprise copper oxides and/or zinc oxide and/or silver oxide and/or metallic copper and/or metallic zinc.

5. Method, as in one or more of the previous claims, wherein said firing temperature (Tc) is less than 480°C.

6. Method, as in claim 5, wherein said firing temperature (Tc) is comprised between 300°C and 450°C.

7. Method, as in claim 5, wherein said firing temperature (Tc) is comprised between 450°C and 480°C.

8. Method, as in claim 7, wherein said intermediate cooling temperature (Tri) is comprised between 280 and 390°C.

9. Method, as in one or more of the previous claims, comprising, after or simultaneously to cooling said coated mineral grit to an intermediate cooling temperature (Tri), a step of putting said coated mineral grit into contact with a third treatment mixture comprising a polyalkylbenzenes-based hydrocarbon solvent in which phosphoric and/or silanic esters of ethoxylated fatty acids are dispersed.

10. Method, as in one or more of the previous claims, comprising, after arranging some rough mineral grit, and before inserting said rough mineral grit into mixing means (2), a step of pre-heating wherein said rough mineral grit is heated to a predetermined pre-heating temperature (Tpr).

11. Method, as in claim 10, comprising, simultaneously or after said step of pre-heating and before inserting said rough mineral grit into said mixing means (2), a step of mechanically stirring said rough mineral grit.

12. Method, according to claim 10 or 11, wherein, between said step of pre-heating and said step of inserting said rough mineral grit into mixing means (2), said rough mineral grit is contained in a heating furnace (4) which is **characterized by** the fact of comprising, simultaneously or after said step of pre-heating and before inserting said rough mineral grit into mixing means (2), a step of removing the air present in the region of said pre-heating furnace (4) containing said rough mineral grit.

13. Method, according to one or more of the previous claims, wherein said rough mineral grit comprises basalt and/or slate and/or cristobalite and/or olivine grit.

## Patentansprüche

1. Verfahren zur Herstellung von beschichteten Mineralkörnern für die Herstellung von Beschichtungselementen mit einer bituminösen Unterlage oder mit einer Unterlage umfassend einen Vinyl- oder Acrylklebstoff enthält, für die Bedachung von Gebäuden, umfassend die folgenden Schritte:
- Anordnen einiger groben Mineralkörner;
- nach dem Anordnen einiger grober mineralischer Körner, Einführen der groben mineralischen Körner in die Mischmittel (2) zusammen mit einer ersten Behandlungsmischung enthaltend Wasser, Pigmente, Natriumsilikat und/oder Kaliumsilikat und Kaolin;
- nach dem Einführen des groben Mineralkorns in die Mischmittel (2), Mischen des groben Mineralkorns und der ersten Behandlungsmischung, bis ein beschichtetes Mineralkorn erhalten wird;
- nach dem Mischen des groben Mineralkorns und der ersten Behandlungsmischung, Erhitzen des beschichteten Mineralkorns auf eine vorbestimmte Brenntemperatur (Tc);
- nach dem Erhitzen des beschichteten Mineralkorns Abkühlen des beschichteten Mineralkorns bis zu einer vorbestimmten Zwischenkühltemperatur (Tri);
wobei das Verfahren **dadurch gekennzeichnet ist, dass** die erste Behandlungsmischung ein oder mehrere Organo-Siloxane und/oder Silane umfasst, die auf diese Weise mittels einer wässrigen Lösung auf das grobe Mineralkorn aufgebracht werden.

2. Verfahren nach Anspruch 1, das nach oder gleichzeitig mit dem Abkühlen des beschichteten Mineralkorns einen weiteren Schritt umfasst, wobei das beschichtete Mineralkorn mit einer zweiten Behandlungsmischung in Kontakt gebracht wird, die Wasser und ein oder mehrere Organo-Siloxane und/oder Silane umfasst.

3. Verfahren nach einem oder mehreren der vorhergehenden Ansprüche, wobei die erste Behandlungsmischung ein oder mehrere Additive mit Antifouling-Eigenschaften enthält.

4. Verfahren nach Anspruch 3, wobei das eine oder die mehreren Additive mit Antifouling-Eigenschaften Kupferoxide und/oder Zinkoxid und/oder Silberoxid und/oder metallisches Kupfer und/oder metallisches Zink umfassen.

5. Verfahren nach einem oder mehreren der vorhergehenden Ansprüche, wobei die Brenntemperatur (Tc) weniger als 480°C beträgt.

6. Verfahren nach Anspruch 5, wobei die Brenntemperatur (Tc) zwischen 300°C und 450°C liegt.

7. Verfahren nach Anspruch 5, wobei die Brenntemperatur (Tc) zwischen 450°C und 480°C liegt.

8. Verfahren nach Anspruch 7, wobei die Zwischenkühlungstemperatur (Tri) zwischen 280 und 390°C liegt.

9. Verfahren nach einem oder mehreren der vorhergehenden Ansprüche, das nach oder gleichzeitig mit dem Abkühlen des beschichteten Mineralkorns auf eine Zwischenkühlungstemperatur (Tri) einen Schritt umfasst, wobei der beschichtete Mineralkorn mit einem dritten Behandlungsgemisch in Kontakt gebracht wird, das ein Kohlenwasserstofflösungsmittel auf Polyalkylbenzolbasis umfasst, in dem Phosphorsäure- und/oder Kieselsäureester von ethoxylierten Fettsäuren dispergiert sind.

10. Verfahren, nach einem oder mehreren der vorhergehenden Ansprüche, das, nach dem Anordnen einiger grober Mineralkörner und vor dem Einführen der groben Mineralkörner in die Mischmittel (2), einen Schritt des Vorheizens umfasst, wobei die groben Mineralkörner auf eine vorbestimmte Vorheiztemperatur (Tpr) erhitzt werden.

11. Verfahren nach Anspruch 10, das gleichzeitig oder nach dem Schritt des Vorheizens und vor dem Einführen des groben Mineralkorns in die Mischmittel (2) einen Schritt des mechanischen Rührens des groben Mineralkorns umfasst.

12. Verfahren nach Anspruch 10 oder 11, wobei das grobe Mineralkorn, zwischen dem Schritt des Vorheizens und dem Schritt des Einführens des groben Mineralkorns in die Mischmittel (2), in einem Heizofen (4) enthalten ist, der **dadurch gekennzeichnet ist, dass** er gleichzeitig oder nach dem Schritt des Vorheizens und vor dem Einführen des groben Mineralkorns in die Mischmittel (2) einen Schritt des Entfernens der Luft, die in dem Bereich des Vorheizofens (4), der das grobe mineralische Korn enthält, vorhanden ist.

13. Verfahren nach einem oder mehreren der vorhergehenden Ansprüche, wobei das grobe Mineralkorn Basalt und/oder Schiefer und/oder Cristobalit und/oder Olivin-Korn umfasst.

## Revendications

1. Procédé de production de sable minéral revêtu pour la fabrication d'éléments de revêtement à support bitumineux, ou à support comprenant un adhésif vinylique ou acrylique, pour la couverture de bâtiments, comprenant les étapes consistant à:
- arranger du sable minéral brut;
- après avoir disposé du sable minéral brut, insérer ledit sable minéral brut dans le moyen de mélange (2) avec un premier mélange de traitement comprenant de l'eau, des pigments, du silicate de sodium et/ou du silicate de potassium, du kaolin;
- après avoir inséré ledit sable minéral brut dans le moyen de mélange (2), mélanger ledit sable minéral brut et ledit premier mélange de traitement jusqu'à l'obtention de sable minéral revêtu;
- après avoir mélangé ledit sable minéral brut et ledit premier mélange de traitement, chauffer ledit sable minéral revêtu à une température de cuisson (Tc) prédéterminée;
- après avoir chauffé ledit sable minéral revêtu, refroidir ledit sable minéral revêtu jusqu'à une température de refroidissement intermédiaire (Tri) prédéterminée;
dans lequel le procédé est **caractérisé en ce que** ledit premier mélange de traitement comprend un ou plusieurs organo-siloxanes et/ou silanes qui sont appliqués sur le sable minéral brut au moyen d'une solution aqueuse.

2. Procédé selon la revendication 1, comprenant, après ou simultanément au refroidissement dudit sable minéral revêtu, une étape supplémentaire de mise en contact du sable minéral revêtu avec un deuxième mélange de traitement comprenant de l'eau et un ou plusieurs organo-siloxanes et/ou silanes.

3. Procédé tel que décrit selon l'une ou plusieurs des revendications précédentes, dans lequel le premier mélange de traitement comprend un ou plusieurs additifs ayant des propriétés antisalissures.

4. Procédé selon la revendication 3, dans lequel ledit ou lesdits additifs ayant des propriétés antisalissures comprennent des oxydes de cuivre et/ou des oxydes de zinc et/ou des oxydes d'argent et/ou du cuivre métallique et/ou du zinc métallique.

5. Procédé tel que décrit selon l'une ou plusieurs des revendications précédentes, dans lequel la température de cuisson (Tc) est inférieure à 480 °C.

6. Procédé selon la revendication 5, dans lequel la température de cuisson (Tc) est comprise entre 300 °C et 450 °C.

7. Procédé selon la revendication 5, dans lequel la température de cuisson (Tc) est comprise entre 450 °C et 480 °C.

8. Procédé selon la revendication 7, dans lequel la température de refroidissement intermédiaire (Tri) est comprise entre 280 et 390 °C.

9. Procédé selon l'une ou plusieurs des revendications précédentes, comprenant, après ou simultanément au refroidissement dudit sable minéral revêtu à une température de refroidissement intermédiaire (Tri), une étape de mise en contact dudit sable minéral revêtu avec un troisième mélange de traitement comprenant un solvant hydrocarboné à base de polyalkylbenzènes dans lequel sont dispersés des esters phosphoriques et/ou silaniques d'acides gras éthoxylés.

10. Procédé, tel que décrit selon une ou plusieurs des revendications précédentes, comprenant, après avoir disposé du sable minéral brut, et avant d'insérer ledit sable minéral brut dans le moyen de mélange (2), une étape de préchauffage au cours de laquelle ledit sable minéral brut est chauffé à une température de préchauffage (Tpr) prédéterminée.

11. Procédé selon la revendication 10, comprenant, simultanément ou après l'étape de préchauffage et avant l'insertion du sable minéral brut dans le moyen de mélange (2), une étape d'agitation mécanique du sable minéral brut.

12. Procédé selon la revendication 10 ou 11, dans lequel, entre ladite étape de préchauffage et ladite étape d'introduction dudit sable minéral brut dans le moyen de mélange (2), ledit sable minéral brut est contenu dans un four de chauffage (4) qui est **caractérisé en ce qu'**il comporte, simultanément ou après ladite étape de préchauffage et avant l'introduction dudit sable minéral brut dans le moyen de mélange (2), une étape d'élimination de l'air présent dans la région dudit four de préchauffage (4) contenant ledit sable minéral brut.

13. Procédé selon l'une ou plusieurs des revendications précédentes, dans lequel le sable minéral brut comprend du basalte et/ou de l'ardoise et/ou de la cristobalite et/ou du sable d'olivine.
